# EUROPEAN PATENT APPLICATION

(11) **EP 1 598 570 A2**
(43) Date of publication of application: **23.11.2005**
(21) Application number: 05009025.7
(22) Date of filing: 25.04.2005
(51) Int. Cl.: F16C 33/76, F16C 19/52, G01P 3/44

(54) **Sealing device with an encoder**

(30) Priority: 19.05.2004 IT to20040331
(71) Applicant: Aktiebolaget SKF, 415 50 Göteborg (SE)
(72) Inventor: Vignotto, Angelo, 10134 Torino (IT); Savarese, Claudio, 10060 Airasca Torino (IT); Fadda, Gianmario, 10071 Borgaro Torinese Torino (IT); Russo, Massimo, 10135 Torino (IT)
(74) Representative: Lotti, Giorgio

(57) **Abstract**

Sealing device (1) with an encoder (7) which is suitable for reading the kinematic parameters of the functioning of a rolling contact bearing (3), the device (1) presenting a first shield (6) which is shrink-fit onto an external surface (42) of an inner race (4) of the contact rolling bearing (3) in order to support the said encoder (7), and a deformable blocking device (11), which is obtained on the first shield (6) and which is engaged in a circular groove (44) which is obtained on the external surface (42) in order to axially block the first shield (6) itself onto the inner race (4) while leaving free a contact portion (45) of the external surface (42) itself.

## Description

The present invention relates to a sealing device with an encoder.

The present invention may be advantageously, but not exclusively, applied in the field of sealing devices with encoders which are suitable for being installed in bearing-wheel-hub units, in which the sealing device is mounted in such a way as to protect the bearing on an inner side of the bearing itself. The description which follows will refer, purely as an example, to this specific kind of application without, however, losing any of its general nature due to this fact.

In the application which has just been described above, the sealing device comprises, in its most generic form:
- an inner shield which is shrink-fit onto an inner race of the bearing in order to support the encoder which is suitable for generating a signal for the reading of the kinematic parameters of the functioning of the bearing-wheel-hub unit;
- an outer shield which is shrink-fit onto an outer race of the bearing in a position which counter-faces and is external to the inner shield; and
- a dynamic sealing element which is supported by the outer shield and which is arranged in sliding contact with the inner shield.

Sealing devices of the kind which have just been described above present some disadvantages which are due to the need to provide the inner shield with a cylindrical wall of an axial length which is sufficient to prevent, once it has been shrink-fit onto the inner race of the bearing, any axial displacement whatsoever of the inner shield itself. In addition, the considerable axial dimensions of the cylindrical wall mean that the sealing element must be arranged in sliding contact with the cylindrical wall itself, or rather mean that at least one contact surface of the cylindrical wall must undergo particular mechanical finishing work, and that the entire inner shield must, however, be made of metallic material which contains high levels of carbon.

The aim of the present invention is to produce a sealing device with an encoder, which will permit the resolution of the above-described disadvantages in a simple and cost-effective manner.

According to the present invention a sealing device will be produced with an encoder which is suitable for revealing the kinematic parameters of the functioning of a rolling contact bearing, the sealing device comprising a first shield which is shrink-fit onto an external surface of an inner race of the rolling contact bearing in order to support the said encoder, and being characterised by the fact of comprising deformable blocking means, which are obtained in the first shield, and which are engaged in an annular groove which is obtained in the said external surface in order to axially block the first shield itself on the inner race while leaving free a contact portion of the external surface itself.

The present invention will now be described with reference to the attached drawings, which illustrate a non-limiting form of embodiment of the present invention, and in which:
- FIGURE 1 is a section view, with some parts schematised for reasons of clarity, of a preferred form of embodiment of the sealing device with encoder according to the present invention;
- FIGURE 2 illustrates, in section and on an enlarged scale, a detail of the device which is shown in FIGURE 1;
- FIGURE 3 is a perspective view, with some parts removed for reasons of clarity, of a detail of the device which is shown in FIGURE 1;
- FIGURE 4 illustrates, in section and on an enlarged scale, a second preferred form of embodiment of the device which is shown in FIGURE 1;
- FIGURE 5 illustrates, in section and on an enlarged scale, a third preferred form of embodiment of the device which is shown in FIGURE 1.

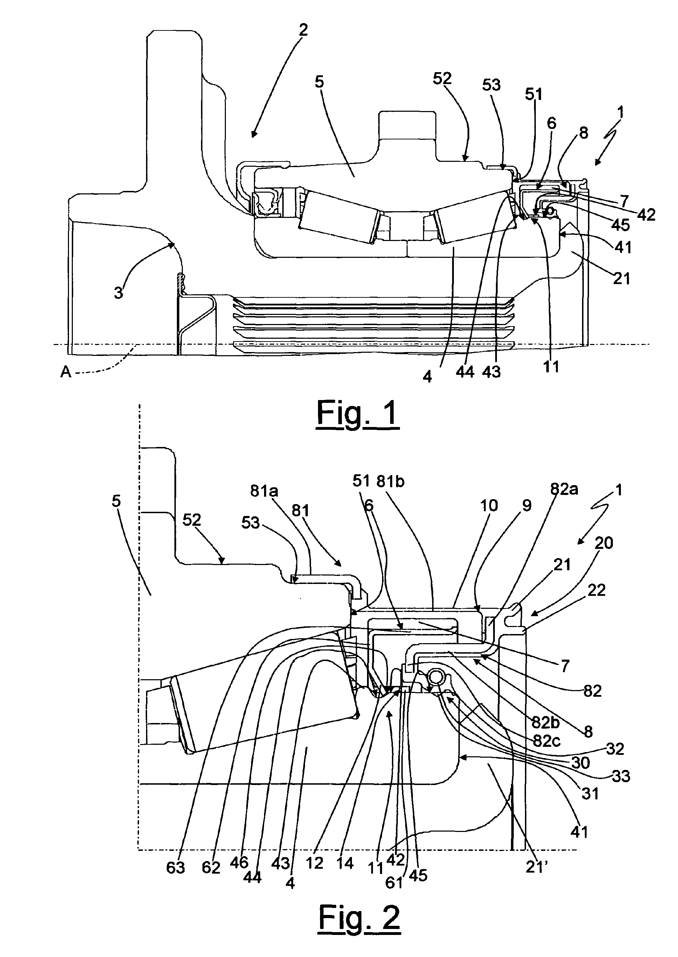

With reference to FIGURES 1, 2 and 3, the number 1 indicates a sealing device for a wheel-hub unit 2 in its entirety.

The unit 2 is provided with a rolling contact bearing 3 comprising an inner race 4 which is co-axial to a rotation axis A of the bearing 3 itself, and an outer race 5 which is co-axial to the inner race 4.

In particular, the outer race 5 presents a frontal annular surface 51 which is transverse to the axis A, an external cylindrical surface 52 which is co-axial to the axis A, and a cylindrical outlet 53, which is contiguous with and transverse to the surface 51, and which is obtained by radially lowering the surface 52. On the other hand, the inner race 4 presents a frontal annular surface 41 which is axially staggered towards the outside in relation to the surface 51, and which is arranged in such a way as to abut a rolled border 21' of the wheel-hub unit 2, and a respective external cylindrical surface 42, which is geometrically delimited in an axial direction by the surfaces 41 and 51, and which is radially faced from the outside by the bearing 3.

In addition, the inner race 4 comprises an inner step 43 which s radially raised in relation to the surface 42, and an annular groove 44, which is obtained in correspondence to the step 43 in order to separate the step 43 itself from the surface 42, and which is axially arranged inside the surface 42 itself.

The sealing device 1 comprises an inner shield 6 which is shrink-fit onto the surface 42, an encoder 7 which is integral with the shield 6 in order to generate a signal for the reading of the kinematic parameters of the functioning of the unit 2, and an outer shield 8, which is shrink-fit onto the outer race 5 in a position which counter-faces and is external to the shield 6, and which is provided with two windows 9 (only one of which is illustrated) which are arranged diametrically opposite the axis A, and which are hermetically sealed by a covering elastic membrane 10 which is substantially integral with the shield 8.

The shield 6 is made of metallic material, and comprises an assembly wall 61 which is of a cylindrical shape and which is shrink-fit onto the surface 42, an annular flange 62 which is transverse to the wall 61 and which is axially arranged in such a way as to abut the step 43, and a support wall 63, which is transverse to the flange 62, and which is arranged co-axially to and radially external to the wall 61 in order to support the encoder 7 in a position which face the window 9.

In addition, the device 1 comprises a deformable blocking element 11 which is obtained in the shield 6, and which comprises a number of elastic tongues 12, which are obtained by means of shearing the shield 6 itself, and which are engaged in the annular groove 44 in order to axially block the shield 6 on the inner race 4 while leaving free a contact portion 45 of the surface 42.

In particular, according to the form of embodiment which is illustrated in FIGURE 2, the tongues 12 are obtained via partial shearing of the wall 61 and the flange 62, and are arranged at an angle in relation to the flange 62 itself in order to be axially inserted inside the groove 44 in such a way as to block the shield 6 and prevent, together with the step 43, any accidental displacement whatsoever from the original assembly position. In terms of this axial abutting function of the step 43, the latter may be intended as being an integral part of the device 1 in the guise of an axial blocking element of the shield 6.

Each tongue 12 is inserted inside the groove 44 either by snap-insertion by means of exploiting its own elasticity, or by means of re-folding or by means of steeling, and comprises a free end 13, which, after assembly, touches against a frontal surface 46 of the groove 44, or rather against a surface which faces the step 43, and which is arranged at an angle opposite the tongue 12 itself.

In addition, the device 11 comprises a number of windows 14, which are obtained during the shearing of the tongues 12 on either side of the wall 61 and the flange 62, and which are each crossed by a respective tongue 12.

The shield 8 is made of metallic material, and comprises a respective assembly wall 81 which is of a cylindrical shape and which is shrink-fit onto the surface 52, and a shaped wall 82 which is integral with the wall 81.

In particular, the wall 81 is defined by two portions 81a and 81b which are axially aligned and which have different diameters from each other, and of which the portion 81a presents a diameter of dimensions which are greater than the dimensions of a diameter of the portion 81b and is shrink-fit onto the outlet 53, while the portion 81b is arranged axially outside in relation to the portion 81a, and presents the windows 9. The shaped wall 82 comprises an annular position 82a which is integral with the portion 81b, and a cylindrical portion 82b, which axially extends in a position which is intermediate between the wall 61 and the flange 62, and presents an end radial rolled bead tuck 82c which is directed towards the wall 61.

Finally the device 1 comprises a static sealing element 20 and a dynamic sealing element 30 which are both integral with the shield 8, and of which the element 20 is interposed between the shield 8 and an external body (which is not illustrated) of the unit 2, while the element 30 is interposed between the shield 8 and the shield 6.

The element 20 comprises two sealing lips 21 and 22, which are arranged co-axially in relation to each other in order to extend in a substantially axial direction from the portion 82a, and of which the lip 21 is radially arranged in a fashion which is co-planar to the membrane 10, and is of a substantially conical shape, while the lip 22 is radially arranged inside the lip 21, and transversally extends from the portion 82a.

The dynamic sealing element 30 comprises a main sealing lip which is anchored to the tuck 82c, and which is arranged in sliding contact with the portion 45 of the surface 42, and an auxiliary sealing lip 32 which is integral with the lip 31 and which is arranged in a position which is axially external in relation to the lip 31 itself.

In particular, the lip 1 presents a spring 33 which is incorporated in order to increase the sealing capacity in relation to the surface 42, while the auxiliary lip 32 is arranged at an axial end of the lip 31 and presents a thickness of a lesser dimension to a thickness of the lip 31 itself.

The presence of the tongues 12 not only permits the shield 6 to be made of a material with a low level of carbon as it no longer needs to be arranged in sliding contact with any sealing element, but also permits the element 30 to be arranged in direct contact with the surface 42, the physical and mechanical characteristics of which also permit the adoption of the lip 32 with the advantage of a greater dynamic sealing capacity of the device 1'.

In addition, the windows 14 are suitable for permitting the passage of the grease of the bearing 3 as far as the main lip 31 in such as way as to ensure a good lubrication of the lip 31 itself with beneficial effects regarding the reduction of friction and wear of the lip 31 itself.

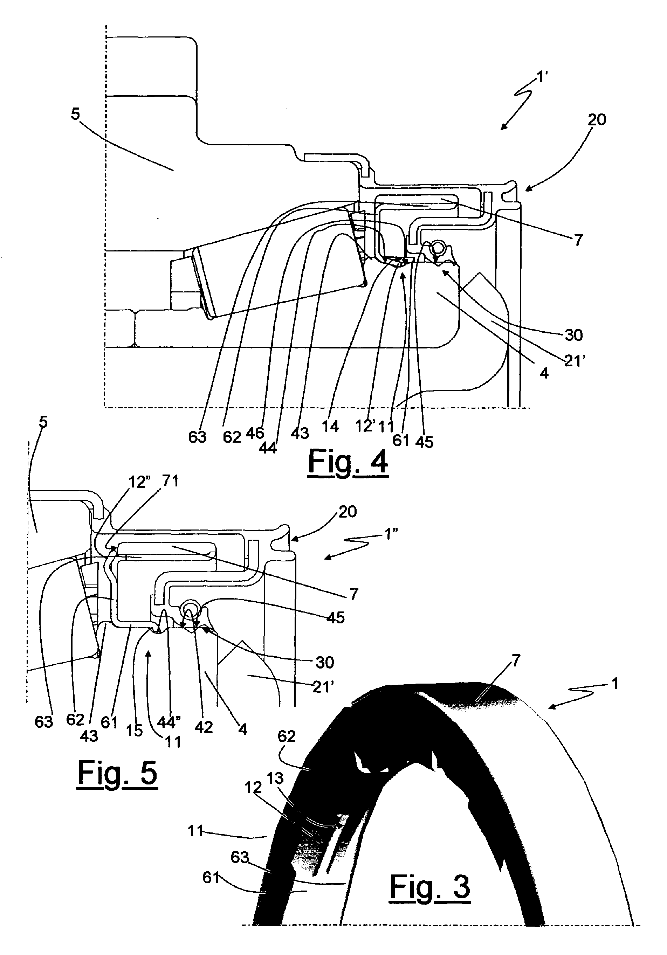

The form of embodiment which is illustrated in FIGURE 4 relates to a device 1' which is similar to the device 1, from which the device 1' differs due to the fact that the elastic tongues, which are shown here with the number 12', are produced by means of shearing the only wall 61, and are radially deformable. As a consequence, also the windows, which are shown here with the number 14', are produced through the wall 61 in order to rest on a purely circumferential plane, and the tongues 12' are anchored on one side by the flange 62, and extend from the flange 62 itself and towards the windows 14' in order to be engaged inside the groove, which is shown here with the number 44', which presents an axial dimension which is substantially equal to the length of the tongues 12'.

The form of embodiment which is illustrated in FIGURE 5 relates to a device 1" which is similar to the device 1, from which the device 1" differs due to the fact that the elastic tongues, which are shown here with the number 12", are no longer used to axially block the shield 6, but are produced by partial shearing of the flange 62 and the wall 61 in order to axially block the encoder 7 on one of its own inner sides 71.

The moulding of the tongues 12" permits the opening through the shield 6 of respective windows 14" which are suitable for permitting the passage of the grease of the bearing 3 in the same way as the windows 14.

In the form of embodiment which is illustrated in FIGURE 5, the deformable blocking device 11 comprises a radial tuck 15, which is obtained by radially folding towards the inside a free edge of the wall 61, and which is arranged inside a circular groove 44", which is obtained on the surface 42 at an axial distance from the step 43 which is equal to an axial length of the wall 61.

The tuck 15 is a continuous tuck, but it may also be defined by a number of teeth, each of which may be inserted inside the groove 44".

Also in this case, the presence of the tuck 15 permits the freeing of the portion 45 from the surface 42 against which the element 30 is arranged in sliding contact with the advantages which have previously been described herein.

It is intended that the present invention should not be limited to the forms of embodiment which are herein described and illustrated, which are to be considered as examples of forms of embodiment of the sealing device with encoder, and which may instead by subject to further modifications relating to the shape and disposition of its parts, as well as to details pertaining to construction and assembly.

## Claims

1. Sealing device(1)(1')(1") with an encoder (7) which is suitable for revealing the kinematic parameters of the functioning of a rolling contact bearing (3), the sealing device (1)(1')(1") comprising a first shield (6) which is shrink-fit onto an external surface (42) of an inner race (4) of the rolling contact bearing (3) in order to support the said encoder (7), and being **characterised by** the fact of comprising deformable blocking means (11), which are obtained in the first shield (6), and which are engaged in an annular groove (44)(44')(44") which is obtained in the said external surface (42) in order to axially block the first shield (6) itself on the inner race (4) while leaving free a contact portion (45) of the external surface (42) itself.

2. Sealing device according to Claim 1, **characterised by** the fact that the first shield (6) comprises a number of passing windows (14)(14')(14"); the said deformable blocking mean (11) comprising a number of deformable tongues (12)(12')(12") which are arranged through the windows (14)(14')(14") of the first shield (6).

3. Sealing device according to Claim 2, **characterised by** the fact that the first shield (6) comprises a cylindrical wall (61) which is shrink-fit onto the said external surface (42) in a position which is axially next to the said contact portion (45); a support wall (63) for the said encoder (7); and a connection flange (62) between the support wall (63) and the cylindrical wall (61).

4. Sealing device according to Claim £, **characterised by** the fact that the said tongues (12) are axially deformable.

5. Sealing device according to Claim 4, **characterised by** the fact that the said windows (14) are obtained on either side of the cylindrical wall (61) and the flange (62); the said tongues (12) extend from the flange (62) towards the cylindrical wall (61) in order to be engaged inside the annular groove (44).

6. Sealing device according to Claim 4, **characterised by** the fact that the said windows (14") are obtained on either side of the support wall (63) and the flange (62); the said tongues (12) extend from the flange (62) towards the support wall (63) in order to be engaged in such a way as to abut the said encoder (7).

7. Sealing device according to Claim 6, **characterised by** the fact that the said deformable blocking means (11) comprise a radial tuck (15) which defines a free edge of the said cylindrical wall (61) and which is arranged inside the said annular groove (44").

8. Sealing device according to Claim 7, **characterised by** the fact that the said radial tuck (15) is a continuous tuck.

9. Sealing device according to Claim 3, **characterised by** the fact that the said tongues (12)(12')(12") (12') are radially deformable.

10. Sealing device according to Claim 4, **characterised by** the fact that the said windows (14') are obtained through the cylindrical wall (61); the said tongues (12') extend from the flange (62) and through the cylindrical wall (61) in order to be engaged inside the annular groove (44').

11. Sealing device according to any of the preceding Claims whatsoever, **characterised by** the fact of comprising axial blocking means (43), which are integral with the outer race (4), and which cooperate with the said deformable blocking means (1) in order to axially block the first shield (6) on the outer race.

12. Sealing device according to Claim 11, **characterised by** the fact that the said axial blocking means (43) are defined by an annular step (43) which is obtained starting from the external surface (42) of the inner race (4); the first shield (6) being shrink-fit in such a way as to axially abut the annular step (43).

13. Sealing device according to any of the preceding Claims whatsoever, **characterised by** the fact of comprising a second shield (8) which is shrink-fit onto an outer race (5) of the bearing (3) in a position which counter-faces and is external to the first shield (6); and a dynamic sealing element (30) which is supported by the second shield (8) and which is arranged in sliding contact with the said contact portion (45).

14. Sealing device according to Claim 13, **characterised by** the fact that the said dynamic sealing element (30) comprises a main lip (31) which is arranged in contact with the said contact portion (45), and a spring (33) which is incorporated in the main lip (31).

15. Sealing device according to Claim 14, **characterised by** the fact that the said dynamic sealing element (30) comprises an auxiliary lip (32) which is integral with the main lip (31) and which is arranged in a position which is axially external in relation to the main lip (31) itself.

16. Sealing device according to Claim 15, **characterised by** the fact that the secondary lip (32) presents a thickness which is of lesser dimensions than the main lip (31).

17. Sealing device according to any of the preceding Claims whatsoever, **characterised by** the fact of comprising a static sealing element (20) which is integral with the second shield (8), and comprising at least one sealing lip (21) (22), which extends in a substantially axial direction from the second shield (8) in order to produce a static seal with an element which is external to the said bearing (3).

18. Sealing device according to Claim 17, **characterised by** the fact that the said sealing element (20) comprises two sealing lips (21, 22), which extend in a substantially axial direction from the second shield (8) in order to produce a static seal with an element which is external to the said bearing (3).
